# EUROPEAN PATENT SPECIFICATION

(11) **EP 2 079 257 B1**
(45) Date of publication and mention of the grant of the patent: **27.07.2011**
(21) Application number: 08000392.4
(22) Date of filing: 10.01.2008
(51) Int. Cl.: H04W 16/00

(54) **Time based and hybrid resource partitioning**
Zeitbasierte und hybride Ressourcenaufteilung
Partage de ressources hybride et à base temporelle

(43) Date of publication of application: 15.07.2009
(73) Proprietor: Nokia Siemens Networks Oy, 02610 Espoo (FI)
(72) Inventor: Costa, Elena, Dr., 81739 München (DE); Halfmann, Rüdiger, 67697 Otterberg (DE); Luo, Jijun, Dr., 81549 München (DE); Xiang, Yikang, 81549 München (DE); Zhanh, Ying, 81737 München (DE)
(74) Representative: Bruglachner, Thomas E.

(56) References cited:
- EP-A- 1 565 018
- EP-A- 1 937 012
- WO-A-2006/086788
- US-A1- 2006 268 755
- US-A1- 2007 086 406
- US-A1- 2007 259 635
- US-A1- 2007 281 700
- "Interference avoidance concepts" IST-4-027756 WINNER II, D4.7.2 V1.0, [Online] 30 June 2007 (2007-06-30), pages 1-85, XP002484258 Retrieved from the Internet: URL:www.ist-winner.org> [retrieved on 2008-06-11]

## Description

This application relates to an interference coordination method in a mobile cellular network. This technique is applicable to an RAN (Radio Access Network) and to UE (user equipment) of the mobile cellular network.

A cellular wireless system comprises a number of sites. The individual site has three cells with a base station (BS) in a centre of the site. The BS transmits information on downlink channels to wireless terminals in the cell. The wireless terminals may experience interference from the neighbouring base station. The interference is of particular significance where a cellular system load is high or where the wireless terminal is located on a cell edge.

Frequency reuse can reduce the interference at a site. This is usually easy to implement but it reduces usable bandwidth and thereby affecting trunking efficiency.

A way of implementing the frequency reuse is to allocate a different portion of a usable frequency bandwidth to each cell of the site. In this case, the available frequency bandwidth for the cell is reduced. The trunking efficiency and frequency diversity is also reduced as the full frequency bandwidth is not used by the cell.

A partial frequency reuse scheme is another way of implementing frequency reuse. In this scheme, the total usable frequency bandwidth is subdivided into two parts. The first part is allocated to cell centre users. Cell edge users of each cell are allocated with a different portion of the second part. This enables the cell edge users to experience better SINR (signal to interference and noise ratio) and lower interference. The second part also has a reduced trunking efficiency and frequency diversity as the second part does not cover the total usable frequency.

WO 2006/086788 is related to techniques mitigating inter-cell interference in mobile communications systems. The mitigation is achieved by using joint time and frequency division techniques. According to these techniques, a cell is divided into an inner region and into an outer region. Data exchanged with users in the cell, is done in a first time interval on a frequency band for users located in the inner region, while data exchanged with users locates in multiple outer regions is done in a second time interval on multiple frequency subbands of the frequency band.

The application provides a mobile cellular network with a plurality of cells. The mobile cellular network comprises a plurality of resource sets. The resource set is transmitted in a synchronised manner by the mobile cellular network to a plurality of cell users. The resource set is partitioned in a time domain into a first part and a second part. The first part is allocated to cell centre users whilst the second part is partitioned into a plurality of portions, the portions being selectively allocated to cell edge users of the cell.

It is believed that a time-domain flexible resource reuse scheme can reduce an inter-cell interference and boost network performance. An interference coordination technique in OFDMA (Orthogonal Frequency Division Multiple Access) based mobile RAN (Radio Access Network) can produce higher spectral efficiency.

Every portion of the second part can be allocated to the cell edge users of a different cell. The first part can be partitioned in a frequency domain into a plurality of portions whilst the portion of the first part can be allocated to the cell centre users of the respective cell. The second part can also be partitioned in the time domain. The second part may be partitioned in the frequency domain. The second part can also be partitioned in the time and in the frequency domains.

The mobile cellular network may comprise an Orthogonal Frequency Division Multiple Access (OFDMA) based system. The mobile cellular network may also be in a form of a Beyond 3GPP (Third Generation Partnership Project) network or in a form of a 4GPP (Fourth Generation Partnership Project) network.

The resource set can also be in the form of at least one radio frame, which comprises the at least two sub-frames. The first part can be allocated the at least one sub-frame whilst the second part can be allocated the at least one sub-frame. The first part can be allocated the at least one radio frame. The second part can be allocated the at least one radio frame.

A method of transmitting a plurality of resource sets between a transmitting station and a plurality of cell users of a mobile cellular network, the resource set being transmitted in a synchronised manner, comprises the steps of partitioning the resource set in a time domain into a first part and a second part; allocating the first part of the resource set to cell centre users; partitioning the second part into a plurality of portions; allocating the portion of the second part to cell edge users of the cell; and sending the resource set from the transmitting station to the cell users in the plurality of cells.

The method may comprise the further step of adjusting a size of the first part and a size of the second part in response to a condition of the mobile cellular network. The condition may comprise a ratio of a total number of cell centre users to a total number of cell edge users. The condition may comprise a spatial information of a cell antenna.

The method may also comprise the further step of adjusting a size of the portion of the second part in response to a condition of the cell. The condition may comprise cell edge traffic load distribution of the neighbouring cells.

A method of transmitting a plurality of resource sets between a transmitting station and a plurality of cell users of a first cell of a mobile cellular network, the resource set being transmitted in a synchronised manner between the first cell and a second cell, the second cell being a neighbour to the first cell, the method comprising the steps of partitioning the resource set in a frequency domain into a first part and a second part; allocating the first part of the resource set to the cell users of the first cell; allocating the second part of the resource set to the cell users of the second cell; and transmitting the resource set from the transmitting station to the cell users in the respective cell.

The part of the resource set allocated to the first cell can be swapped with the part of the resource set allocated to the second cell after each transmission.

A high frequency-adaptive resource allocation gain is achieved by the application. Both cell centre users and cell edge users can access the whole bandwidth, so that more frequency diversity gain can be achieved as compared to other resource partition. This is especially important for systems of narrow bandwidth where a maximum useable frequency resource is less 20 MHz (megahertz), where frequency partition would significantly reduce frequency diversity.

The application requires less CQI (channel quality indicator) feedback overhead. Channel fading is correlated to frequency. Thus, signalling of channel information, such CQI report in the FDD (Frequency Division Duplex) system can be compressed accordingly. Significant lower feedback rates can be attained by using lossy compression of SINR via transforming code, such as discrete cosine transform, which utilizes inherent correlation of the CQI on the frequency domain. In the partial frequency reuse scheme, the edge user is limited to a part of the frequency resource, and the lossy compression of CQI in this case works not as effectively as if on the whole bandwidth. The correlation of the channel fading to time domain cannot be exploited since the CQI feedback allows no delay over multiple sub-frames.

An extended UE (user equipment) battery life can be provided. The UE can switch to sleep mode, wherein RF (radio frequency) module is turned off, when the sub-frames are dedicated to adjacent cells or to other group of UEs, which are located at the cell centre or at the cell edge. Therefore, less battery power is required and the battery life of the user equipment is extended.

A reduction of processing 'speed' is provided. Since only each nth sub-frame is processed for the corresponding resource partition, there is a saving factor of n regarding the processing speed. Moreover, even though there is an extension of the number of subcarriers by n the computational load becomes lower since the digital signal processing via the frequency axis is much more efficient than via the time axis. An FFT (Fast Fourier Transform) of n*m subcarriers causes less effort then computing n times an FFT of m subcarriers.

In order to exploit fully the advantages of frequency as well as time based partitioning, an adaptive hybrid-partitioning scheme is most promising option.

A hopping resource partition pattern averages interference for local cells, if the cells in the surrounding area are not coordinated. The localized coordination is usually preferred if network-wide coordination is not possible.

When spatial information is added to a signalling of the resource partition pattern, better interference prediction can be generated even if beam-forming techniques are used by base stations (BSs) with multiple transmit antennas. A higher interference avoidance gain can thus be achieved.
- FIG. 1: illustrates a schematic diagram of a site with a plurality of cells of an Orthogonal Frequency Division Multiple Access (OFDMA) based Radio Access Network (RAN) that has a partial resource reuse,
- FIG. 2: illustrates a radio frame structure in time domain of the OFDMA based RAN of FIG. 1,
- FIG. 3: illustrates the radio frame of FIG. 2 in time and frequency domains with a flexible resource reuse in the time domain,
- FIG. 4: illustrates a plurality of radio frame in time and frequency domains with a flexible resource reuse in the time and frequency domains,
- FIG. 5: illustrates a resource set with a hybrid time and frequency resource partitioning,
- FIG. 6: illustrates a resource partition with a hopping pattern, and
- FIG. 7: illustrates a resource partition with spatial information.

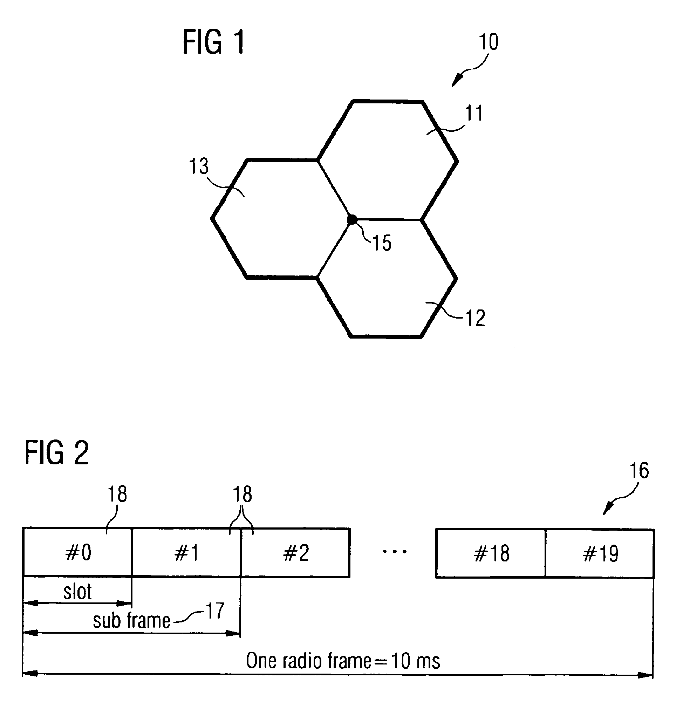

FIG. 1 depicts a site 10 with a plurality of cells 11, 12 and 13. The cell is a geographical area. The cells 11, 12 and 13 are part of an Orthogonal Frequency Division Multiple Access (OFDMA) based Radio Access Network (RAN) of a mobile cellular network.

The site 10 has a pattern of the three cells 11, 12 and 13 and a base station (BS) 15 at its centre. The cells 11, 12 and 13 are adjacent to each other. The mobile cellular network has a plurality of these sites 10. The sites 10 are spaced apart such that the cell 11, 12, or 13 of the site 10 is adjacent to another cell 11, 12, or 13 of the adjacent site. The BSs of the multiple sites are connected to a core network of the mobile cellular network. The BS and the core network are not shown in the FIG. 1.

The RAN has radio resources in three domains, namely, frequency, power, and time. A transmission in the RAN is synchronised or co-ordinated.

The operational cell 11, 12, or 13 has a plurality of user equipments (UEs), which are attached to the BS 15 of the cell 11, 12, or 13. A cell edge UE can be simultaneously attached to the BS 15 of the cell and to another BS of the adjacent cell.

The UE transmits data from a user of the UE to the core network, which forwards the data to another UE of the same mobile cellular network or to another UE of another mobile cellular network. The UE can be called a mobile node. The user is also called a subscriber.

FIG. 2 shows a radio frame structure 16 of the OFDMA based RAN of FIG. 1 in time domain. The RAN, as provide here, is part of a B3G (Beyond Third Generation) mobile cellular network. The radio frame structure 16 is also called radio frame or frame.

The radio frame 16 has duration of 10 milliseconds (ms) and it is partitioned in the time domain into ten equally sized sub-frames 17. The sub-frame 17 is also partitioned in the time domain into two equally sized slots 18.

In a generic sense, the radio frame structure 16 can also be of a 4G (Fourth generation) or of a 3GPP LTE (Long Term Evolution) mobile cellular network. The radio frame 16 is a form of a resource set.

The radio frame 16 is used for organizing data that are transmitted between the core network and the UE. The radio frame 16 is used for downlink (DL) transmission and (UL) transmission. In the DL transmission, data is transmitted from the core network to the UE whilst in the UL transmission, the data is transmitted from the UE to the core network. The data transmission from the different BSs (base stations) of the same RAN is coordinated such that the different BSs are operated in a synchronized manner.

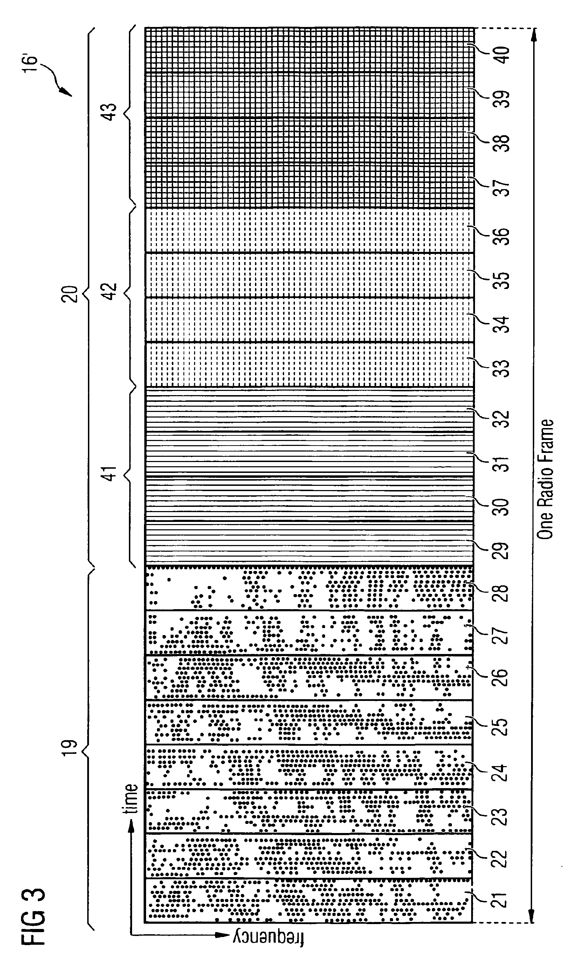

FIG. 3 depicts a radio frame structure 16' of the OFDMA based RAN of FIG. 1. The radio frame structure 16' is partitioned in the frequency and time domains. The partition is done with a flexible resource reuse in the time domain.

The radio frame 16' is divided into a first part 19 and a second part 20. The radio frame 16' is also partitioned into slots 21 to 40.

The first part 19 includes the slots 21 to 28. The second part 20 comprises three equal portions 41, 42, and 43. The first portion 41 includes the slots 29 to 32, the second portion 42 includes the slots 33 to 36, and the third portion 43 comprises the slots 37 to 40.

In a generic sense, the radio frame 16' can be similar to the radio frame 16 of FIG. 2.

A method using the radio frame 16' with the flexible partial resource reuse in the time domain is described below.

The method includes a provision of the radio frame 16'. The slots 21 to 40 of the radio frame 16' are allocated to the cells 11 to 13 with no partition in the time domain.

If traffic increases and the QOS experienced by the users of the mobile cellular network falls below an acceptable level due to interference, the mobile cellular network partitions the radio frame 16' into the first part 19 and the second part 20. The size of the first part 19 and the second part 20 is dependent on a ratio (R) of a number of the cell centre users to a number of the cell edge users.

After this, the first part 19 is assigned to the cell centre users. The first portion 41 of the second part 20 is assigned to the cell edge users in the cell 11, whereas the second portion 42 is allocated to the cell edge users in the cell 12. The third portion 43 is assigned to the cell edge users in the cell 13.

Later, the traffic condition can change. The size of the first part 19 and the second part 20 is then adjusted to cater to the new ratio (R). The number of slots 29 to 40 that is allocated to the portions 41, 42, and 43 in the second part 20 can also be changed to balance the number of cell edge users in the respective cells 11, 12, and 13.

In a generic sense, the number of the slots 21 to 40 that is allocated to the first part 10 and to the second part 20 can be different from the above embodiment. The order of the portions 41 to 43 that is allocated to the cells 11 to 13 can also be different to the order, as shown in the above embodiment. The number of the slots 29 to 40 allocated to the cells 11, 12, or 13 in the second part 20 can also be different.

The method benefits from good frequency diversity and trunking efficiency since there is a full or almost full utilisation of the whole frequency band. There is a small additional delay due to prohibition in transmission of certain sub-frames in the 3GPP LTE network. The delay is short because the length of the radio frame in the 3GPP LTE network is only 10 ms.

The first part 19 benefits from a reuse factor of one and is assigned to the cell centre users who are less affected by inter-cell signal interference.

The second part benefits from reduced signal interference and is assigned to the cell edge users. As the transmission of signal is done one cell at a time in the second part, the reuse factor is three. The transmission of signal in this manner reduces or eliminates inter-cell interference in the second part. The cells 11 to 13 are adjacent to each other and are located a same site. The assignment thereby improves a Quality of Service (QOS) for the cell edge user. The cell edge user also experiences an improvement in SINR (signal to interference and noise ratio).

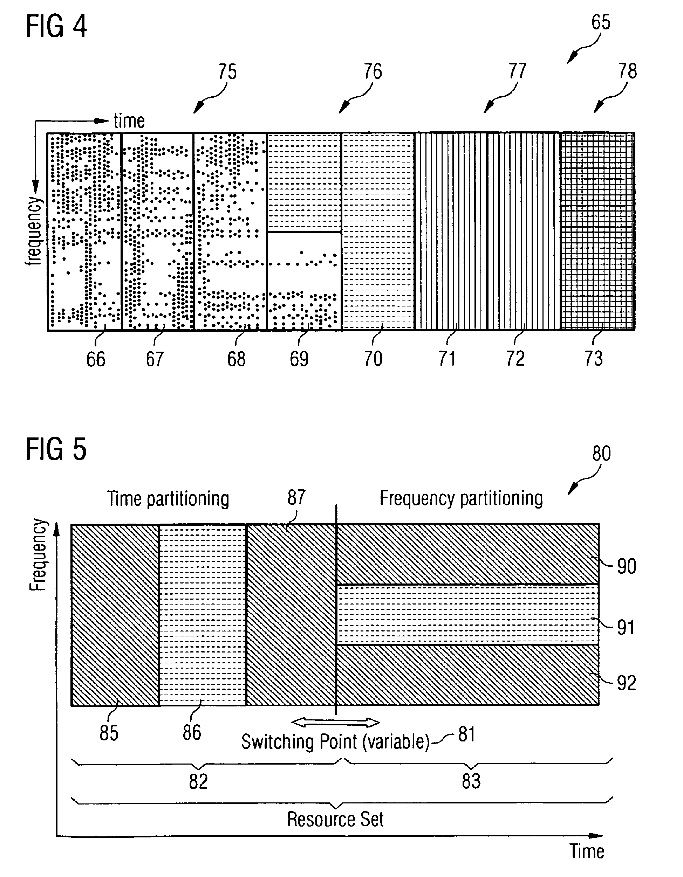

Examples of FIGS. 4 to 7 include parts that are similar to the example of FIGS. 1 to 3. The similar parts have similar names or same part number with a prime symbol. The description the similar parts is thus incorporated by reference.

FIG. 4 shows a plurality 65 of radio frames 66 to 73 of the OFDMA based RAN of FIG. 1 in a time and frequency domains. The frames 66 to 73 have a flexible resource reuse in the time and frequency domains.

The BS (base station) of FIG. 1 transmits the frames 66 to 73. The plurality 65 of frames 66 to 73 is partitioned into parts 75 to 78. The part 75 includes the frames 66 to 68 and a portion of the frame 69. The part 76 comprises the frame 70 and remaining portion of the frame 69. The part 77 includes the frame 71 and 72. The part 78 includes the frame 73.

A method of using the plurality 65 of radio frames 66 to 73 with a flexible resource reuse in the time and frequency domain includes a provision of the plurality 65 of frames 66 to 73.

Then, the part 75 is assigned to a cell centre users of the cells 11 to 13 of FIG. 1. The part 76 is allocated to a cell edge users of the cell 11 whilst the part 77 is allocated to the cell edge users of the cell 12. The part 78 is assigned to the cell edge users of the cell 13.

Afterwards, the number of the frames allocated to the cell centre users can change, as needed to meet traffic conditions or Quality of Service. The number of frames assigned to the cell centre users of the individual cells 11 to 13 can also be altered, as needed.

The above example shows a flexible resource reuse in the time and frequency domains. The method of the example can be applied to a partition pattern that spans over multiple radio frames wherein the radio frame has only a few number of sub frames. Broadcasting of the radio frames may have more complex signalling since a broadcasting channel is usually present for each radio frame and a radio resource allocation is independently decided for each individual radio frame.

FIG. 5 depicts a resource set 80 of the OFDMA based RAN of FIG. 1. The resource set 80 has a hybrid time and frequency resource partitioning that is adaptive in nature.

The resource set 80 is divided in the time domain into a first part 82 and a second part 83. A switching point 81 is located between the first part 82 and the second part 83. The first part 82 is partitioned in the time domain into portions 85, 86, and 87 whilst the second part 83 is divided in the frequency domain into portions 90, 91, and 92.

The resource set 80 has a simple structure of a two-dimensional partitioning that can be transferred in two one-dimensional schemes, which require a low signalling overhead.

The resource set 80 can be a form of the plurality of radio frames 16 of FIG.2 or the radio frames 16' of FIG. 3.

The resource set 80 is for transmission of data in the RAN of FIG. 2 description.

A method of using the resource set 80 with adaptive hybrid time and frequency resource partitioning includes the step of assignment as described above.

The method comprises a provision of the resource set 80. The first part 82 is assigned to signal from one cell at a time. The portion 85 of the first part 82 is allocated to cell edge users of the cell 11 of FIG. 1. The portion 86 is assigned to cell edge users of the cell 12 whereas the portion 87 is allocated to cell edge users of the cell 13.

After this, a frequency band of the second part 83 is allocated to each cell 11 to 13. The portion 90 of the second part 83 is allocated to cell centre users of the cell 11 whilst the portion 91 is allocated to cell centre users of the cell 12. The portion 92 is allotted to cell centre users of the cell 13.

If the traffic condition changes, the switching point 81 can later be changed to adapt a new ratio of a number of cell edge users to a number of the cell centre users. The size of the portions 85 to 87 can also altered to adapt to the number of cell edge users in the individual cells 11 to 13.

The method provides an adaptive hybrid-partitioning scheme that benefits from advantages of time based and frequency based partitioning. The first part 82 has a time-based partitioning and thereby benefits from frequency diversity gain and power concentration. The second part 83 has a frequency based partitioning and thus gains from frequency diversity gain.

The switching point 81 requires a small additional signalling overhead for implementation and allows for an easy adaptation towards a fully time-based or towards a fully frequency based partitioning strategy.

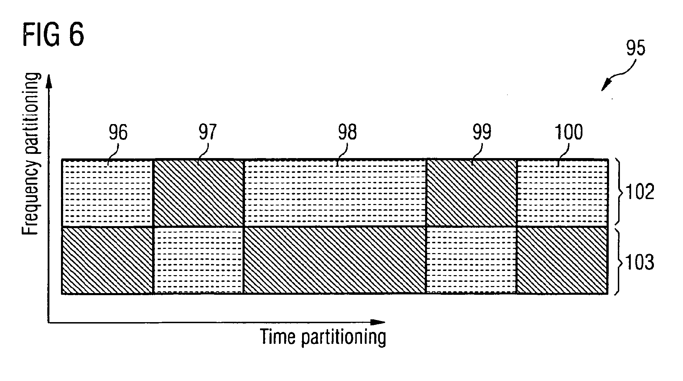

FIG. 6 shows a resource set 95 of the OFDMA based RAN of FIG. 1. The resource set 95 is partitioned in time and frequency domains. The resource set 95 is shared between two neighbouring cells 11 and 12 of FIG. 2. The resource partition has a hopping pattern.

The resource set 95 is divided in the time domain into five parts 96 to 100 and is also divided in the frequency domain into an upper frequency band 102 and a lower frequency band 103.

The resource set 85 can be in a form of the radio frame 16 of FIG. 2.

The division of the frequency domain is arranged to eliminate mutual interference. The arrangement provides a periodic exchange of frequency band between the neighbouring cells and seeks to average an interference located at the cell edge.

A method of using the resource set 95 with the hopping pattern includes the step of providing the resource set 95.

The cells 11 and 12 are then assigned with the hopping pattern.

The cell 11 is assigned to the upper frequency band 102 of the first part 96, to the lower frequency band 103 of the second part 97, and to the upper frequency band 102 of the third part 98. The cell 11 is also allocated to the lower frequency band 103 of the fourth part 99 and to the upper frequency band 102 of the fifth part 100.

Likewise, the cell 12 is assigned to the lower frequency band 103 of the first part 96, to the upper frequency band 102 of the second part 97, and to the lower frequency band 103 of the third part 98. The cell 11 is also assigned to the upper frequency band 102 of the fourth part 99 and to the lower frequency band 103 of the fifth part 100.

The above method can be applied to resolve signal interference between neighbouring cells. It does not require network-wide coordination and requires coordination at a local area between two neighbouring cells.

In a generic sense, the frequency hopping can be applied among three cells in a network. The network can identify and broadcast a common hopping sequence. The broadcast coordinate and synchronize the implementation of the frequency hopping sequence among the cells in the network.

Related signalling requirement for the inter-cell resource partition pattern should be known not only by the BSs (base stations) in the network, but also has to be signalled to the UEs (user equipments) for purpose of network-wide coordination. The signalling can be provided in two ways.

In the first case, identifiers of a certain predefined partition pattern need to be signalled as the pattern is known to network entities, such the BS or the UE.

The partition patterns are not defined, in the second case. The signalling has to provide specific description of the partition pattern. This provides greater flexibility, since it is not easy to predefine all possible resource partition patterns. This approach requires more signalling overhead.

In both cases, changes of the partition pattern only happen after a complete hopping cycle is finished, so to guarantee synchronized operation.

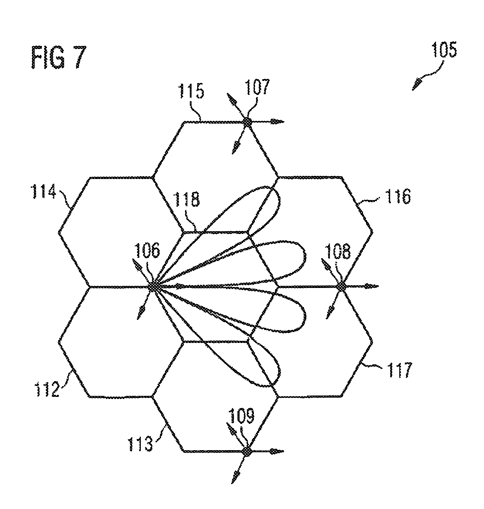

A plurality of cells 112 to 117 is depicted in FIG. 7. The cells 112, 114, and 118 are located adjacent to each other. The cell 113 is located adjacent to the cell 112 and to the cell 118 whilst the cell 117 is placed adjacent to the cell 113 and to the cell 118. The cell 116 is placed adjacent to the cell 117 and to the cell 118 whilst the cell 115 is located adjacent to the cell 114 and to the cell 118.

A plurality of access points (APs) 106 to 109 are located among the cells 112 to 117. The AP 106 is placed at a centre of a site that has the cells 112, 114, and 118. The AP 107 is placed at a corner of the cell 115 whilst the AP 108 is placed at a corner of the cell 116 and at a corner of the cell 117. The AP 109 is located at a corner of the cell 113. The APs 106, 107, 108, and 109 have sector antennas.

The sector antenna at the AP 106 transmits signal beams that cover the cell 118 and the cells that are adjacent to the cell 118. These adjacent cells are the cells 115, 116, 117, and 113.

The sector antenna at the AP 106 is a form of an interferer, which sends signals to its cell and to cells that are next its cell. These signals generate inter-cell interference.

The above figure depicts an embodiment where transmitters are equipped with multiple antennas. The inter-cell interference depends not only on the distance to the interferer but also varies according to an antenna weighting vectors used by the interferer, as shown in FIG. 7.

When spatial processing strategies are selected on a longterm basis, for example over several super-frames as assumed in the WINNER (Wireless World Initiative New Radio), a configuration of the antenna weighting vectors is stable enough to be exchanged among the cells. In this case, the inter-cell interference can be estimated by knowing the antenna weighting vectors used by the interfering APs (access points). Higher performance gain can thus be achieved by interference avoidance techniques, such as dynamic resource partitioning.

In other words, information regarding the operational spatial processing, such as beam main direction, should be provided together with a signalling for dynamic and flexible resource partition to achieve higher spectrum efficiency.

The resource partitions as shown for the embodiments of FIG. 1 to 7 can be applied in a downlink and in an uplink. The resource partition in the downlink can be the same or different to the resource partition in the uplink.

When the resource partitions in the downlink and in the uplink are the same or when there exists a certain relationship between them, only the resource partition in one direction is signalled to the BS and to the UE. The resource partition in the other direction can be determined by following certain predetermined rules. This is referred to as implicit signalling.

If the resource partitions in the downlink and in the uplink are different, the signalling for the resource partitions in both directions is signalled to the BS and the UE. This is referred to as explicit signalling. The uplink and downlink resource partitions may be different due to asymmetric traffic load requirement between the uplink and the downlink.

### List of abbreviations

- 4G: Fourth generation
- AP: access point
- B3G: Beyond Third Generation
- BS: base station
- BCH: broadcast channel
- CQI: channel quality indicator
- DAC: Direct Access Channel
- DL: downlink
- FDD: Frequency Division Duplex
- FFT: Fast Fournier Transform
- LTE: Long Term Evolution
- OFDMA: Orthogonal Frequency Division Multiple Access
- QOS: Quality of Service
- RAN: Radio Access Network
- RAC: random access channel
- RF: radio frequency
- SINR: signal to interference and noise ratio
- UE: user equipment
- UL: transmission
- WINNER: Wireless World Initiative New Radio

### Reference numbers

- 10: site
- 11, 12, 13: cell
- 15: base station
- 16, 16': radio frame
- 17: sub-frame
- 18: slot
- 19: first part
- 20: second part
- 21 to 40: slot
- 41, 42, 43: portion
- 65: plurality
- 66 to 73: frame
- 75 to 78: part
- 80: resource set
- 81: switching point
- 82: first part
- 83: second part
- 85 to 87: portion
- 90 to 92: portion

## Claims

1. A mobile cellular network with a plurality of cells (11, 12, 13), the mobile cellular network comprises a plurality of resource sets (16, 16'), wherein
- a resource set (16') is transmitted in a synchronised manner by the mobile cellular network to a plurality of cell users,
- the resource set (16') is partitioned in a time domain into a first part (19) and a second part (20),
- the first part is allocated to cell centre users, and
- the second part is partitioned into a plurality of portions (41, 42, 43), the portions (41, 42, 43) being selectively allocated to cell edge users of a cell, **characterized in that** a size of the portion of the second part is adjusted in response to a condition of the cell wherein the condition comprises cell edge traffic load distribution of cells neighbouring the cell.

2. The mobile cellular network according to claim 1,
**characterised in that**
every portion of the second part is allocated to the cell edge users of a different cell.

3. The mobile cellular network according to claim 1 or 2,
**characterised in that**
the first part is partitioned in a frequency domain into a plurality of portions.

4. The mobile cellular network according to one of the preceding claims,
**characterised in that**
the portion of the first part is allocated to the cell centre users of the respective cell.

5. The mobile cellular network according to one of the preceding claims,
**characterised in that**
the second part is partitioned in the time domain.

6. The mobile cellular network according to one of the claims 1 to 4,
**characterised in that**
the second part is partitioned in the frequency domain.

7. The mobile cellular network according to one of the claims 1 to 4,
**characterised in that**
the second part is partitioned in the time and in the frequency domains.

8. The mobile cellular network according to one of the preceding claims,
**characterised in that**
the mobile cellular network comprises an Orthogonal Frequency Division Multiple Access, OFDMA, based system.

9. The mobile cellular network according to one of the preceding claims,
**characterised in that**
the mobile cellular network is in a form of a Beyond 3GPP, Third Generation Partnership Project, network.

10. The mobile cellular network according to one of the claims 1 to 8,
**characterised in that**
the mobile cellular network is in a form of a 4G, Fourth Generation , network.

11. The mobile cellular network according to one of the preceding claims,
**characterised in that**
the resource set is in the form of at least one radio frame, the radio frame comprises the at least two sub-frames.

12. The mobile cellular network according to one of the preceding claims,
**characterised in that**
the first part is allocated the at least one sub-frame.

13. The mobile cellular network according to one of the preceding claims,
**characterised in that**
the second part is allocated the at least one sub-frame.

14. The mobile cellular network according to one of the claims 1 to 11,
**characterised in that**
the first part is allocated the at least one radio frame.

15. The mobile cellular network according to one of the claims 1 to 11,
**characterised in that**
the second part is allocated the at least one radio frame.

16. A method of transmitting a plurality of resource sets (16, 16') between a transmitting station (15) and a plurality of cell users of a mobile cellular network, the resource set (16, 16') being transmitted in a synchronised manner, the method comprising the steps of
- partitioning a resource set (16') in a time domain into a first part (19) and a second part (20),
- allocating the first part (19) of the resource set to cell centre users,
- partitioning the second part (20) into a plurality of portions (41, 42, 43),
- allocating the portion of the second part to cell edge users of a cell, and
- sending the resource set (16') from the transmitting station (15) to cell users in the plurality of cells, **characterised in that** a size of the portion of the second part is adjusted in response to a condition of the cell, wherein the condition comprises cell edge traffic load distribution of cells neighbouring the cell.

17. The method according to the claim 16 comprises the further step of
adjusting a size of the first part and a size of the second part in response to a condition of the mobile cellular network.

18. The method according to the claim 17,
**characterised in that**
the condition comprises a ratio of a total number of cell centre users to a total number of cell edge users.

19. The method according to the claim 17 or 18,
**characterised in that**
the condition comprises a spatial information of a cell antenna.

## Patentansprüche

1. Mobil-Zellularnetz mit mehreren Zellen (11, 12, 13), wobei das Mobil-Zellularnetz mehrere Betriebsmittelsätze (16, 16') umfasst, wobei
- ein Betriebsmittelsatz (16') auf synchronisierte Weise durch das Mobil-Zellularnetz zu mehreren Zellenbenutzern gesendet wird,
- der Betriebsmittelsatz (16') in einem Zeitbereich in einen ersten Teil (19) und einen zweiten Teil (20) aufgeteilt wird,
- der erste Teil an Zellenzentrumbenutzer vergeben wird und
- der zweite Teil in mehrere Teile (41, 42, 43) aufgeteilt wird, wobei die Teile (41, 42, 43) selektiv an Zellenrandbenutzer einer Zelle vergeben werden, **dadurch gekennzeichnet, dass** eine Größe des Teils des zweiten Teils als Reaktion auf einen Zustand der Zelle justiert wird, wobei der Zustand Zellenrand-Verkehrslastverteilung von der Zelle benachbarten Zellen umfasst.

2. Mobil-Zellularnetz nach Anspruch 1, **dadurch gekennzeichnet, dass**
jeder Teil des zweiten Teils an die Zellenrandbenutzer einer anderen Zelle vergeben wird.

3. Mobil-Zellularnetz nach Anspruch 1 oder 2, **dadurch gekennzeichnet, dass**
der erste Teil in einem Frequenzbereich in mehrere Teile aufgeteilt wird.

4. Mobil-Zellularnetz nach einem der vorhergehenden Ansprüche, **dadurch gekennzeichnet, dass**
der Teil des ersten Teils an die Zellenzentrumbenutzer der jeweiligen Zelle vergeben wird.

5. Mobil-Zellularnetz nach einem der vorhergehenden Ansprüche, **dadurch gekennzeichnet, dass**
der zweite Teil im Zeitbereich aufgeteilt wird.

6. Mobil-Zellularnetz nach einem der Ansprüche 1 bis 4, **dadurch gekennzeichnet, dass**
der zweite Teil im Frequenzbereich aufgeteilt wird.

7. Mobil-Zellularnetz nach einem der Ansprüche 1 bis 4, **dadurch gekennzeichnet, dass**
der zweite Teil im Zeit- und im Frequenzbereich aufgeteilt wird.

8. Mobil-Zellularnetz nach einem der vorhergehenden Ansprüche, **dadurch gekennzeichnet, dass**
das Mobil-Zellularnetz ein auf Orthogonal Frequency Division Multiple Access OFDMA basierendes System umfasst.

9. Mobil-Zellularnetz nach einem der vorhergehenden Ansprüche, **dadurch gekennzeichnet, dass**
das Mobil-Zellularnetz in Form eines Netzes des Beyond 3GPP Third Generation Partnership Project vorliegt.

10. Mobil-Zellularnetz nach einem der Ansprüche 1 bis 8, **dadurch gekennzeichnet, dass**
das Mobil-Zellularnetz in einer Form eines 4G-Fourth-Generation-Netzes vorliegt.

11. Mobil-Zellularnetz nach einem der vorhergehenden Ansprüche, **dadurch gekennzeichnet, dass**
der Betriebsmittelsatz in der Form mindestens eines Funkrahmens vorliegt, wobei der Funkrahmen die mindestens zwei Subrahmen umfasst.

12. Mobil-Zellularnetz nach einem der vorhergehenden Ansprüche, **dadurch gekennzeichnet, dass**
dem ersten Teil der mindestens eine Subrahmen vergeben wird.

13. Mobil-Zellularnetz nach einem der vorhergehenden Ansprüche, **dadurch gekennzeichnet, dass**
dem zweiten Teil der mindestens eine Subrahmen vergeben wird.

14. Mobil-Zellularnetz nach einem der Ansprüche 1 bis 11, **dadurch gekennzeichnet, dass**
dem ersten Teil der mindestens eine Funkrahmen vergeben wird.

15. Mobil-Zellularnetz nach einem der Ansprüche 1 bis 11, **dadurch gekennzeichnet, dass**
dem zweiten Teil der mindestens eine Funkrahmen vergeben wird.

16. Verfahren zum Senden mehrerer Betriebsmittelsätze (16, 16') zwischen einer Sendestation (15) und mehreren Zellenbenutzern eines Mobil-Zellularnetzes, wobei der Betriebsmittelsatz (16, 16') auf synchronisierte Weise gesendet wird, wobei das Verfahren die folgenden Schritte umfasst:
- Aufteilen eines Betriebsmittelsatzes (16') in einem Zeitbereich in einen ersten Teil (19) und einen zweiten Teil (20),
- Vergeben des ersten Teils (19) des Betriebsmittelsatzes an Zellenzentrumbenutzer,
- Aufteilen des zweiten Teils (20) in mehrere Teile (41, 42, 43),
- Vergeben des Teils des zweiten Teils an Zellenrandbenutzer einer Zelle und
- Senden des Betriebsmittelsatzes (16') von der Sendestation (15) zu Zellenbenutzern in den mehreren Zellen, **dadurch gekennzeichnet, dass** eine Größe des Teils des zweiten Teils als Reaktion auf einen Zustand der Zelle justiert wird, wobei der Zustand Zellenrand-Verkehrslastverteilung von der Zelle benachbarten Zellen umfasst.

17. Verfahren nach Anspruch 16, das ferner den folgenden Schritt umfasst:
Justieren einer Größe des ersten Teils und einer Größe des zweiten Teils als Reaktion auf einen Zustand des Mobil-Zellularnetzes.

18. Verfahren nach Anspruch 17, **dadurch gekennzeichnet, dass** der Zustand ein Verhältnis einer Gesamtzahl von Zellenzentrumbenutzern zu einer Gesamtzahl von Zellenrandbenutzern umfasst.

19. Verfahren nach Anspruch 17 oder 18, **dadurch gekennzeichnet, dass**
der Zustand eine räumliche Information einer Zellenantenne umfasst.

## Revendications

1. Réseau cellulaire mobile avec une pluralité de cellules (11, 12, 13), le réseau cellulaire mobile comprend une pluralité d'ensembles de ressources (16, 16'), dans lequel
- un ensemble de ressources (16') est transmis d'une manière synchronisée par le réseau cellulaire mobile à une pluralité d'utilisateurs de cellule,
- l'ensemble de ressources (16') est partagé dans un domaine temporel en une première partie (19) et une deuxième partie (20),
- la première partie est attribuée à des utilisateurs du centre de cellule, et
- la deuxième partie est partagée en une pluralité de parties (41, 42, 43), les parties (41, 42, 43) étant sélectivement attribuées à des utilisateurs de bords de cellule d'une cellule, **caractérisé en ce qu'**une taille de la partie de la deuxième partie est ajustée en réponse à une condition de la cellule, dans lequel la condition comprend une répartition de charge de trafic de bords de cellule de cellules voisines de la cellule.

2. Réseau cellulaire mobile selon la revendication 1,
**caractérisé en ce que**
chaque partie de la deuxième partie est attribuée aux utilisateurs de bords de cellule d'une cellule différente.

3. Réseau cellulaire mobile selon la revendication 1 ou 2,
**caractérisé en ce que**
la première partie est partagée dans un domaine fréquentiel en une pluralité de parties.

4. Réseau cellulaire mobile selon l'une quelconque des revendications précédentes,
**caractérisé en ce que**
la partie de la première partie est attribuée aux utilisateurs du centre de cellule de la cellule respective.

5. Réseau cellulaire mobile selon l'une quelconque des revendications précédentes,
**caractérisé en ce que**
la deuxième partie est partagée dans le domaine temporel.

6. Réseau cellulaire mobile selon l'une quelconque des revendications 1 à 4,
**caractérisé en ce que**
la deuxième partie est partagée dans le domaine fréquentiel.

7. Réseau cellulaire mobile selon l'une quelconque des revendications 1 à 4,
**caractérisé en ce que**
la deuxième partie est partagée dans les domaines temporel et fréquentiel.

8. Réseau cellulaire mobile selon l'une quelconque des revendications précédentes,
**caractérisé en ce que**
le réseau cellulaire mobile comprend un système basé sur un Accès Multiple par Répartition Orthogonale de la Fréquence, OFDMA.

9. Réseau cellulaire mobile selon l'une quelconque des revendications précédentes,
**caractérisé en ce que**
le réseau cellulaire mobile est sous la forme d'un réseau Au-delà de 3GPP, Third Generation Partnership Project.

10. Réseau cellulaire mobile selon l'une quelconque des revendications 1 à 8,
**caractérisé en ce que**
le réseau cellulaire mobile est sous la forme d'un réseau 4G, Fourth Generation.

11. Réseau cellulaire mobile selon l'une quelconque des revendications précédentes,
**caractérisé en ce que**
l'ensemble de ressources est sous la forme d'au moins une trame radio, la trame radio comprend les au moins deux sous-trames.

12. Réseau cellulaire mobile selon l'une quelconque des revendications précédentes,
**caractérisé en ce que**
la première partie se voit attribuer l'au moins une sous-trame.

13. Réseau cellulaire mobile selon l'une quelconque des revendications précédentes,
**caractérisé en ce que**
la deuxième partie se voit attribuer l'au moins une sous-trame.

14. Réseau cellulaire mobile selon l'une quelconque des revendications 1 à 11,
**caractérisé en ce que**
la première partie se voit attribuer l'au moins une trame radio.

15. Réseau cellulaire mobile selon l'une quelconque des revendications 1 à 11,
**caractérisé en ce que**
la deuxième partie se voit attribuer l'au moins une trame radio.

16. Procédé de transmission d'une pluralité d'ensembles de ressources (16, 16') entre une station de transmission (15) et une pluralité d'utilisateurs de cellules d'un réseau cellulaire mobile, les ensembles de ressources (16, 16') étant transmis d'une manière synchronisée, le procédé comprenant les étapes de :
- partage d'un ensemble de ressources (16') dans un domaine temporel en une première partie (19) et une deuxième partie (20),
- attribution de la première partie (19) de l'ensemble de ressources à des utilisateurs de centre de cellule,
- partage de la deuxième partie (20) en une pluralité de parties (41, 42, 43),
- attribution de la partie de la deuxième partie à des utilisateurs de bords de cellule d'une cellule, et
- envoi de l'ensemble de ressources (16') de la station de transmission (15) à des utilisateurs de cellule dans la pluralité de cellules, **caractérisé en ce qu'**une taille de la partie de la deuxième partie est ajustée en réponse à une condition de la cellule, dans lequel la condition comprend une répartition de charge de trafic de bords de cellule de cellules voisines de la cellule.

17. Procédé selon la revendication 16, comprenant l'étape additionnelle de
ajustement d'une taille de la première partie et d'une taille de la deuxième partie en réponse à une condition du réseau cellulaire mobile.

18. Procédé selon la revendication 17,
**caractérisé en ce que**
la condition comprend un rapport d'un nombre total d'utilisateurs de centre de cellules sur un nombre total d'utilisateurs de bords de cellules.

19. Procédé selon la revendication 17 ou 18,
**caractérisé en ce que**
la condition comprend une information spatiale d'une antenne de cellule.
